# EUROPÄISCHE PATENTSCHRIFT

(11) **EP 0 878 448 B1**
(45) Veröffentlichungstag und Bekanntmachung des Hinweises auf die Patenterteilung: **18.12.2002**
(21) Anmeldenummer: 98201491.2
(22) Anmeldetag: 07.05.1998
(51) Int. Cl.: C03B 7/11

(54) **Schmermesser zum Abscheren von flüssigem Glas**
Shear blades for shearing molten glass
Lames de ciseaux pour découper le verre fondu

(30) Priorität: 13.05.1997 AT 29497 U
(43) Veröffentlichungstag der Anmeldung: 18.11.1998
(73) Patentinhaber: PLANSEE TIZIT GESELLSCHAFT M.B.H., 6600 Reutte/Tirol (AT)
(72) Erfinder: Reinhardt, Hermann, Dipl.-Ing., 98593 Hohleborn (DE); Schretter, Michael, 6632 Ehrwald (AT)
(74) Vertreter: Lohnert, Wolfgang, Dr.

(56) Entgegenhaltungen:
- DE-C- 19 636 352
- US-A- 3 962 939
- US-A- 5 275 637
- A.M.NAERMAN ET AL.: "Materials for the manufacture of the cutting blades of gob feeders (a review)" GLASS AND CERAMICS, Bd. 41, Nr. 7/8, Juli 1984 - August 1984, Seiten 345-349, XP002073448 NEW YORK, US

## Beschreibung

Derartige Schermesser sind paarweise auf vollautomatischen Anlagen im Einsatz und scheren durch gegenläufige Bewegungen aus einem Strang von flüssigem Glas Glastropfen ab, die dann zu Glasflaschen, Behälterglas, Bildschirmen und ähnlichen Erzeugnissen weiterverarbeitet werden. Auf der Glasablaufseite der Schermesser setzt sich im Laufe der Zeit Glasabrieb ab, der zu Verschleiß der Schermesser und Qualitätsverschlechterungen an der Schnittfläche des Glases führt. Bei Glasteilen, die eine sehr glatte Oberfläche aufweisen müssen, wie insbesondere bei Bildschirmen, müssen die abgescherten Oberflächen der Glasteile nachgeschliffen werden. Je schlechter die Oberflächenqualität ist, desto höher ist der Schleifaufwand, der einen beträchtlichen Umfang der Fertigungskosten ausmachen kann. Ein häufiges Wechseln der Schermesser zur Vermeidung einer schlechten Oberflächenqualität sollte jedoch auch möglichst vermieden werden, da Stillstandszeiten bei den vollautomatischen Anlagen sehr teuer sind und außerdem bei jedem Neuanfahren der Anlage, insbesondere bei großen Glasteilen, ein Ausschuß von Glasteilen anfällt. Man hat daher immer versucht, die Schermesser an der Glaskontaktseite mit einer möglichst guten Oberflächenqualität durch Feinbearbeitung, wie Schleifen und Polieren zu versehen, wobei diese Feinbearbeitung bisher aufgrund einer einfacheren Fertigung so erfolgte, daß die Bearbeitungsriefen senkrecht zur Schnittrichtung verlaufen. Gleichzeitig hat man, um den Verschleiß so gering als möglich zu halten, vielfach Stahl als Werkstoff für die Schermesser durch Hartmetall ersetzt. Aber selbst bei Verwendung der wesentlich teureren Hartmetall-Werkstoffe waren die Standzeiten der Schermesser und die Oberflächen der abgescherten Glasteile in der Vergangenheit nicht voll befriedigend.

Amorphe bzw. diamantähnliche Kohlenstoffschichten, auch DLC (diamond like carbon) oder a-C:H-Schichten genannt, haben sich aufgrund ihrer hohen Härte und ihres guten Trockenschmierverhaltens insbesondere für Umform- und Stanzwerkzeuge bewährt, weil die Adhäsionsneigung und das Kaltschweißverhalten zwischen Werkzeug und Werkstoff drastisch reduziert wird. Die Aufbringung derartiger DLC-Schichten erfolgt durch plasmaunterstützte CVD-Verfahren oder PVD-Verfahren.
Der Nachteil dieser DLC-Schichten liegt darin, daß sie nur für maximale Temperaturen von etwa 450°C geeignet sind und sich ihr Einsatz bei extremen Temperaturbelastungen und Temperaturwechselbelastungen, wie beispielsweise im Bereich der zerspanenden Materialbearbeitung nicht bewährt hat.

Die Aufgabe der vorliegenden Erfindung ist es, Schermesser zum Abscheren von Tropfen aus flüssigem Glas zu schaffen, bei denen das Absetzen von Glasabrieb auf der Glasablauffläche bedeutend reduziert ist und die eine verbesserte Verschleißfestigkeit aufweisen, um damit über einen längeren Zeitraum eine bessere Qualität der Scherfläche des abgescherten Glastropfens zu erreichen.

Erfindungsgemäß wird dies dadurch erreicht, daß die Riefen der Feinbearbeitung des Schermessers zumindest teilweise in Schnittrichtung des Messers verlaufen und daß dieser Bereich mit einer DLC-Schicht (Diamond Like Carbon bzw. diamantähnlicher Kohlenstoff versehen ist. Es ist anzustreben, die Feinbearbeitung so durchzuführen, daß die Riefen möglichst vollständig in Schnittrichtung des Messers liegen, da mit einer derartigen Bearbeitung die besten Ergebnisse erzielt werden. Aber auch wenn die Riefen nur teilweise in Schnittrichtung verlaufen, wie es beispielsweise bei kreisförmigen Riefen der Fall ist, wird bereits eine deutliche Verbesserung gegenüber ausschließlich senkrecht zur Schnittrichtung verlaufenden Riefen erreicht. Die Kombination der Merkmale Riefen bzw. Richtung der Feinbearbeitung im wesentlichen in Schnittrichtung sowie DLC-Schicht in diesem Bereich reduziert die Reibung zwischen flüssigem Glas und Schermesser so stark, daß überraschenderweise die DLC-Schicht, die bekannterweise nur bis etwa 450°C beständig ist, vom flüssigen Glas mit einer Temperatur von etwa 1100°C nicht angegriffen bzw. zerstört wird und selbst unter Luftatmosphare stabil bleibt.

Selbst bei sehr langsamen Schneidgeschwindigkeiten der Schermesser, die einen Kontakt des Schermessers und dem flüssigen Glas von mehreren Sekunden bewirken und extremer Temperaturwechselbeanspruchung die sich durch den Rücklauf des Schermessers und dem folgenden Kontakt mit Raumtemperatur ergibt, bleibt die DLC-Schicht stabil und zeigt keinerlei Haftungsprobleme. Auch gegenüber unterschiedlich großen Glastropfen und damit unterschiedlich großen Kontaktflächen mit dem flüssigen Glas zeigt sich keine negative Beeinflussung der DLC-Schicht. Damit ist eine Anpassung der Beschichtung beispielsweise durch ihre Dicke auf bestimmte Anwendungsfälle nicht notwendig.

Die erfindungsgemäßen Schermesser weisen gegenüber Schermessern nach dem Stand der Technik um eine bis zu mehr als doppelt so hohe Standzeit auf. Darüberhinaus ist die Oberflächenqualität des abgescherten Glastropfens wesentlich verbessert, so daß bei Produkten mit hohen Anforderungen an die Oberflächengüte die vielfach notwendige, kostenintensive Schleifarbeit deutlich verkürzt werden kann.
Erfindungsgemäße Schermesser, deren Verschleiß zu hoch ist, können mehrfach wiederverwendet werden, wenn die Glaskontaktflächen entsprechend neu mechanisch bearbeitet und beschichtet werden.

Als besonders vorteilhaft hat es sich herausgestellt, wenn die DLC-Schicht bis zu 25 Atom% Wasserstoff enthält. Dies wird beispielsweise dadurch erreicht, daß die Beschichtung durch ein PVD-Verfahren unter wasserstoffhältiger Atmosphäre aufgebracht wird.

Schichtdicken in der Größenordnung zwischen 1 µm und 5 µm haben sich für die Anwendung der Beschichtung auf Schermesser besonders bewährt.

Die erfindungsgemäßen Schermesser können zwar auch Stahl als Grundwerkstoff aufweisen, besonders bewährt hat es sich jedoch, wenn für den Grundkörper Hartmetall zur Verwendung kommt.

Besonders vorteilhaft ist es, wenn die Riefen der Feinbearbeitung und die DLC-Schicht unmittelbar vor der Schneidkante enden. Dadurch ergibt sich eine vereinfachte Herstellung und verbesserte Scharfkantigkeit der Schneidkante. Unter "unmittelbar vor der Schneidkante" ist in der Praxis in Abhängigkeit von der Schermessergröße ein maximaler Abstand von 0,5 mm zu verstehen. Wichtig ist dabei, daß der Übergangsradius bzw. die Übergangsfläche, die vor der Schneidkante liegt und die das Glas beim Abscheren anhebt, in jedem Fall entsprechend feinbearbeitet und beschichtet ist.

Im folgenden wird die Erfindung anhand von Figuren und anhand eines Herstellungsbeispieles näher beschrieben.

Es zeigen:
- Figur 1: die Prinzipskizze einer Abschervorrichtung zum Abscheren eines flüssigen Glastropfens in Seitenansicht
- Figur 2: die Prinzipskizze der Abschereinrichtung nach Figur 1 in Draufsicht
- Figur 3: ein Schermesser zur Verwendung in einer Abschereinrichtung nach Figur 1 und 2 in vergrößerter Ansicht
- Figur 4: den Schnitt A-A des Schermessers nach Figur 3
- Figur 5: den Schnitt A-A des Schermessers nach Figur 3 mit einer Variante der Ausführung der Glaskontaktfläche

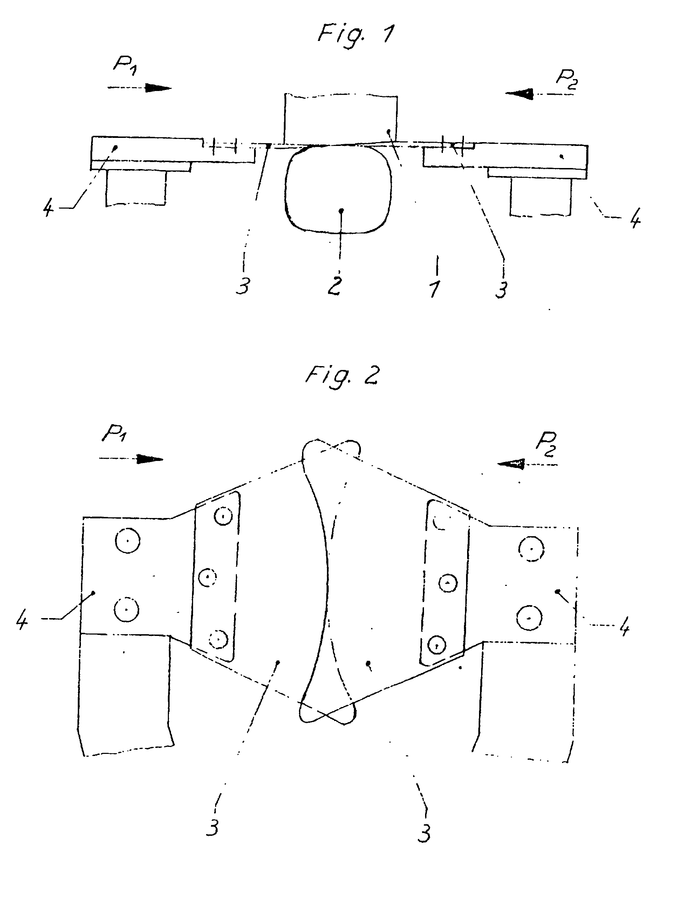

Eine Schereinrichtung zum Abscheren von Glastropfen aus flüssigem Glas gemäß Figur 1 und 2 besteht aus zwei seitlich angeordneten Scherarmen -4-, die sich mit einer einstellbaren Schnittgeschwindigkeit aufeinander zu und voneinander weg bewegen können. Auf jedem dieser beiden Scherarme -4- ist ein Schermesser -3- mit sichelförmiger Schneide so angeordnet, daß sich die sichelförmigen Schneiden gegenüberliegen. Das Schermesser -3- des rechten Scherarmes ist etwas höher positioniert und gleitet unter einer gewissen Vorspannung in Schnittrichtung -P2- über dem etwas tiefer positionierten Schermesser -3- des linken Scherarmes mit der Schnittrichtung -P1-. Das Schermesser -3- des rechten Scherarmes -4- steht an seiner Oberseite in Berührung mit dem flüssigen Glasstrang -1- und ist an dieser Stelle mit der erfindungsgemäßen Oberflächenausführung versehen. Das Schermesser -3- des linken Scherarmes -4- hingegen steht an seiner Unterseite mit dem abgescherten Glastropfen -2- in Verbindung und ist daher an dieser Stelle mit der erfindungsgemäßen Oberflächenausführung versehen.

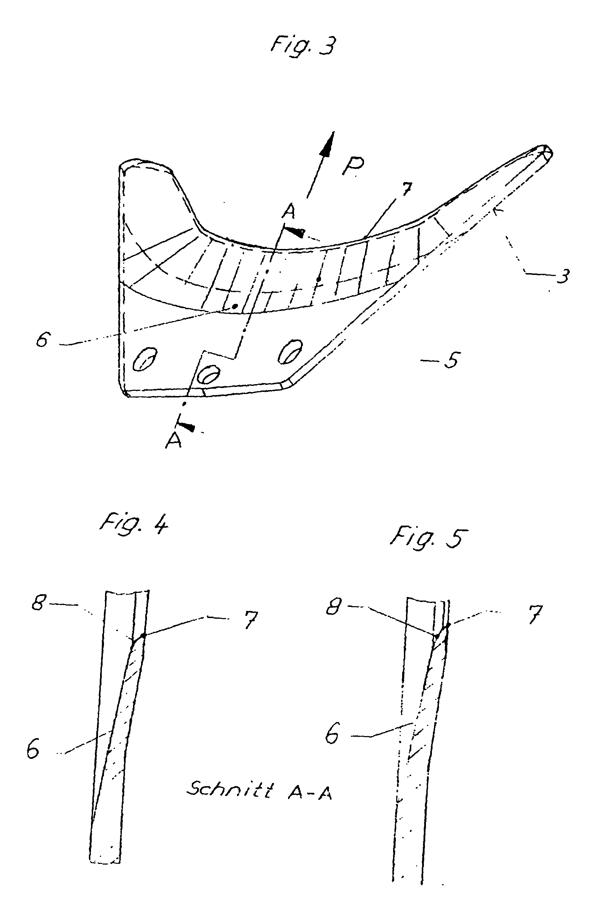

In geöffnetem Zustand der Schereinrichtung berühren sich die Schermesser -3- nur am Rande. Durch die sichelförmigen Schneiden wird eine kreisförmige Öffnung gebildet, durch die sich der flüssige Glasstrang -1- bewegt. Durch gleichzeitiges Aufeinanderzubewegen der Scherarme -4- wird die Schnittbewegung eingeleitet. Dadurch wird vom flüssigen Glasstrang -1- der Glastropfen -2- abgeschert. Die Schneidkanten -7- der beiden Schermesser -3- überdecken sich in der Entstellung je nach Schermessergröße vollständig im Bereich von 0,1 mm bis 5 mm. Der Glasstrang -1- und der abgescherte Glastropfen -2- kommen nur auf der Glaskontaktseite -6- mit den beiden Schermessem -3- in Berührung. Das von der Schneidkante -7- angeschnittene, flüssige Glas wird durch den unmittelbar hinter der Schneidkante -7- angeordneten Übergangsradius -8- entsprechend Figur 4 bzw. durch eine ebene Übergangsfläche -8- entsprechend Figur 5 angehoben und auf die Glaskontaktfläche -6- des Schermessers -3- geleitet. Dadurch besteht im Bereich unmittelbar hinter Schneide -7- fast kein Kontakt mit dem flüssigen Glas mehr, so daß dieser Bereich ohne Feinbearbeitung und ohne Beschichtung bleiben kann, was eine einfachere Herstellung und verbesserte Scharfkantigkeit der Schneide bewirkt. Wichtig ist aber, daß die erfindungsgemäße Feinbearbeitung und Beschichtung zumindest noch den Übergangsradius -8- bzw. die Übergangsfläche -8- mitumfaßt. Anstelle einer einzigen ebenen Übergangsfläche -8-, wie es in Figur 5 dargestellt ist, kann der Übergang zwischen Schneidkante -7- und restlicher Glaskontaktfläche -6- auch durch zwei oder mehrere verschieden geneigte Übergangsflächen erfolgen.

### HERSTELLUNGSBEISPIEL

Ein Schermesserpaar aus Hartmetall wurde jeweils auf der Glaskontaktseite durch Polieren auf eine Rauhigkeit Rₐ von < 0,08 µm so feinbearbeitet, daß die Bearbeitungsriefen in Schnittrichtung verliefen.
Danach wurden die Messer in einer ARC-lon-Plating-Anlage durch Verdampfen eines festen Graphittargets an den Glaskontaktflächen mit einer DLC-Schicht von 2 µm Stärke beschichtet.
Dazu wurden die Messer auf den nicht zu beschichtenden Oberflächen mit einer Blechmaske abgedeckt und auf einem wassergekühlten Substrathalter in die Anlage eingebaut, um die zur Erreichung der DLC-Schichtcharakteristik notwendige niedrige Beschichtungstemperatur von maximal 100°C sicherzustellen. Nach dem Einbau der Schermesser wurde die Vakuumkammer auf 2 x 10⁻⁵ mbar evakuiert und die Schermesser durch Strahlungsheizung bei 250°C ausgeheizt. Im folgenden "lonenätzschritt" wurden die nun gekühlten Schermesser durch Anlegen einer negativen Spannung ("Pulsbias", U_{B} = 1000 V) in einer Argonatmosphäre von
2 x 10⁻² mbar einer 15-minütigen Vorreinigung unterzogen. Dieser Reinigungsschritt ging fließend in den Beschichtungsschritt über. Dazu wurde der Lichtbogen auf das Graphittarget gezündet und die Biasspannung an den Schermessern auf 100 V reduziert. Zur Vermeidung von Mikropartikeln aus Graphit auf der abgeschiedenen Schicht, die durch lokale thermische Überlastung des Targets durch den Lichtbogen entstehen, wurde das entstehende Kohlenstoffplasma elektromagnetisch umgelenkt. Nach einer Startphase unter reiner Argonatmosphäre von 7 x 10⁻⁴ mbar wurde die endgültige Beschichtungsatmosphäre aus einem Argon-Wasserstoff-Gemisch von 9 x 10⁻⁴ mbar eingestellt. Die Beschichtungsdauer betrug 45 Minuten. Die DLC-Schichten wiesen eine Schichtrauhigkeit von Rₐ = 0,2 µm auf. Um die Oberflächenqualität für den Einsatz zu optimieren wurden die Schichten mittels Diamantpaste (KG = 1 µm) auf Rauhigkeitswerte von Rₐ ≤ 0,08 µm poliert.

Ein gleiches Schermesserpaar aus Hartmetall wurde entsprechend dem Stand der Technik auf der Glaskontaktseite so feinbearbeitet, daß die Bearbeitungsriefen zwar dieselben Rauhigkeitswerte wie die erfindungsgemäßen Schermesser aufwiesen, jedoch senkrecht zur Schnittrichtung verliefen. Diese Schermesser wurden zudem nicht beschichtet.

Zum Vergleich wurden das erfindungsgemäße und das dem Stand der Technik entsprechende Schermesserpaar in einer Anlage zum Abscheren von Tropfen aus flüssigem Glas mit etwa 120 mm Durchmesser zur Herstellung von Bildschirmen getestet. Mit dem erfindungsgemäßen Paar wurden etwa 900.000 Stück Glastropfen abgeschert bis der Verschleiß so groß war, daß die Messer ausgetauscht werden mußten. Mit dem Schermesserpaar entsprechend dem Stand der Technik hingegen wurden unter denselben Schnittbedingungen nur etwa 400.000 Stück Glastropfen abgeschert, bis das Messerpaar aus Verschleißgründen nicht mehr zu verwenden war.

Bei Bildschirmen, die aus Glastropfen hergestellt wurden, welche mit dem erfindungsgemäßen Schermesserpaar abgeschert worden sind, war der Schleifaufwand zur geforderten Oberflächenqualität um durchschnittlich 30 % kleiner als bei Bildschirmen, die aus Glastropfen hergestellt wurden, welche mit dem Messerpaar nach dem Stand der Technik unter denselben Bearbeitungsbedingungen abgeschert worden sind.

Die Erfindung ist keinesfalls auf die Zeichnungen und das Herstellungsbeispiel beschränkt.

## Patentansprüche

1. Schermesser (3) zum Abscheren von Tropfen aus flüssigem Glas (2) mit einer feinbearbeiteten Oberfläche (6) im Bereich des Glaskontaktes,
**dadurch gekennzeichnet,**
**daß** die Riefen der Feinbearbeitung im wesentlichen in Schnittrichtung (P) des Messers (3) verlaufen und dieser Bereich mit einer DLC-Schicht (Diamond Like Carbon bzw. diamantähnlicher Kohlenstoff) versehen ist.

2. Schermesser (3) zum Abscheren von Tropfen aus flüssigem Glas (2) nach Anspruch 1, **dadurch gekennzeichnet, daß** die DLC-Schicht bis zu 25 Atom% Wasserstoff enthält.

3. Schermesser (3) zum Abscheren von Tropfen aus flüssigem Glas (2) nach Anspruch 1 oder 2, **dadurch gekennzeichnet, daß** die DLC-Schicht eine Schichtstärke von 1 µm bis 5 µm aufweist.

4. Schermesser (3) zum Abscheren von Tropfen aus flüssigem Glas (2) nach Anspruch 1 bis 3, **dadurch gekennzeichnet, daß** das Grundmaterial Hartmetall ist.

5. Schermesser (3) zum Abscheren von Tropfen aus flüssigem Glas (2) nach Anspruch 1 bis 4, **dadurch gekennzeichnet, daß** die Riefen der Feinbearbeitung und die DLC-Schicht unmittelbar vor der Schneidkante (7) enden.

## Claims

1. Shearing blade (3) for shearing off drops of molten glass (2) with a fine-machined surface (6) in the region of the glass contact, **characterised in that** the fine-machining grooves run substantially in the cutting direction (8) of the blade (3) and this region is provided with a DLC coating (Diamond Like Carbon).

2. Shearing blade (3) for shearing off drops of molten glass (2) according to Claim 1, **characterised in that** the DLC coating contains up to 25 atom% of hydrogen.

3. Shearing blade (3) for shearing off drops of molten glass (2) according to Claim 1 or 2, **characterised in that** the DLC coating has a coating thickness of 1 µm to 5 µm.

4. Shearing blade (3) for shearing off drops of molten glass (2) according to Claim 1 to 3, **characterised in that** the base material is hard metal.

5. Shearing blade (3) for shearing off drops of molten glass (2) according to Claim 1 to 4, **characterised in that** the fine-machining grooves and the DLC coating end immediately before the cutting edge (7).

## Revendications

1. Outil de tranchage (3) pour trancher des gouttes à partir de verre liquide (2), qui comporte une surface finie (6) dans la zone du contact avec le verre, **caractérisé en ce que**
le tracé des stries du finissage est essentiellement dans la direction de coupe (P) de l'outil de tranchage (3) et que cette zone de l'outil comporte une couche de carbone dite semblable au diamant ou DLC (initiales du terme anglo-saxon Diamond Like Carbon).

2. Outil de tranchage (3) pour le tranchage de gouttes à partir de verre fluide (2) selon la revendication 1, **caractérisé en ce que** la teneur atomique en hydrogène de la couche de DLC peut atteindre 25%.

3. Outil de tranchage (3) pour le tranchage de gouttes à partir de verre fluide (2) selon la revendication 1 ou 2, **caractérisé en ce que** l'épaisseur de couche de la couche de DLC est de 1 µm à 5 µm.

4. Outil de tranchage (3) pour le tranchage des gouttes à partir de verre fluide (2) selon l'une quelconque des revendications précédentes, **caractérisé en ce que** la matière de base est un métal dur.

5. Outil de tranchage (3) pour le tranchage des gouttes à partir de verre fluide (2) selon l'une quelconque des revendications précédentes, **caractérisé en ce que** les stries de finissage et la couche de DLC se terminent immédiatement avant l'arête de coupe (7).
